(19) Europäisches Patentamt
European Patent Office
Office européen des brevets

(11) Veröffentlichungsnummer: **0 133 933**
**B1**

# (12) EUROPÄISCHE PATENTSCHRIFT

(45) Veröffentlichungstag der Patentschrift: **06.04.88**

(21) Anmeldenummer: **84108265.4**

(22) Anmeldetag: **13.07.84**

(51) Int. Cl.⁴: **D 06 P 5/08**, C 08 G 73/02 // D06P3/66

## (54) Verfahren zur Herstellung von Färbungen mit Reaktivfarbstoffen.

(30) Priorität: **11.08.83 DE 3329029**

(43) Veröffentlichungstag der Anmeldung: **13.03.85 Patentblatt 85/11**

(45) Bekanntmachung des Hinweises auf die Patenterteilung: **06.04.88 Patentblatt 88/14**

(84) Benannte Vertragsstaaten: **AT BE CH DE FR GB IT LI NL**

(56) Entgegenhaltungen:
**DE-A-2 747 358**
**DE-A-2 843 645**
**DE-C-872 269**
**GB-A-2 099 007**

**CHEMICAL ABSTRACTS, Band 83, Nr. 14, 6. Oktober 1975, Seite 143, Nr. 116810g, Columbus, Ohio, US**
**CHEMICAL ABSTRACTS, Band 94, Nr. 16, April 1981, Seite 81, Nr. 123043q, Columbus, Ohio, US**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft, Hanauer Landstrasse 526, D-6000 Frankfurt am Main 61 (DE)**

(72) Erfinder: **Keil, Karl- Heinz, Dr., Lübecker Weg 3, D-6450 Hanau- Mittelbuchen (DE)**
Erfinder: **Engelhardt, Fritz, Dr., Hünfelder Strasse 20, D-6000 Frankfurt/Main 61 (DE)**
Erfinder: **Greiner, Ulrich, Dr., Nidderauerstrasse 13, D-6369 Schöneck 1 (DE)**
Erfinder: **Sternberger, Klaus, Georg- Opper-Strasse 12, D-6368 Bad Vilbel (DE)**
Erfinder: **Pelster, Manfred, Ulmenweg 18a, D-6720 Speyer (DE)**

(74) Vertreter: **Urbach, Hans- Georg, Dr., Hanauer Landstrasse 526, D-6000 Frankfurt am Main 61 (DE)**

**EP 0 133 933 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft eine Methode zur verfahrenstechnisch einfacheren und preisgünstigeren Herstellung von Färbungen von Textilmaterialien, bestehend aus oder enthaltend Zellulosefasern mit Reaktivfarbstoffen mit hohem Naßechtheitsniveau.

Das Färben von Textilmaterialien, wie zum Beispiel Geweben, Gewirken oder auch Garnen und Fäden, bestehend aus oder enthaltend Zellulosefasern mit Reaktivfarbstoffen, kann nach bekannten Verfahren dadurch erfolgen, daß das Textilmaterial nach Art eines Ausziehverfahrens mit einer Reaktivfarbstoff enthaltender Färbeflotte, meist bei erhöhter Temperatur und bei den meisten handelsüblichen Reaktivfarbstofftypen in Gegenwart von Alkali, behandelt wird, oder es können zweistufige Prozesse, wie z. B. das sogenannte Pad-Steam-Verfahren, oder das Kaltverweilverfahren eingesetzt werden. Beim Pad-Steam-Prozess, wie auch beim Kaltverweilverfahren, wird das Textilmaterial zunächst mit einer Reaktivfarbstoffflotte geklotzt, wobei Alkali schon zugegen sein kann oder auch in einem getrennten Imprägnierschritt appliziert werden kann. Bei Pad-Steam-Verfahren wird die Farbstoffixierung dann durch einen Dämpfprozess, beim Kaltverweilverfahren durch Aufdocken der imprägnierten Ware und mehrstündiges Aufbewahren bei Normaltemperatur vollzogen. Auch andere Fixierschritte, wie z. B. das Behandeln der mit einer alkalifreien ReaktivfarbstoffFlotte geklotzten Ware mit heißer Wasserglaslösung, sind bekannt geworden und werden technisch ausgeübt.

Bei allen genannten Reaktiv-Färbeverfahren wird im Verlauf des Färbevorgangs eine kovalente chemische Bindung zwischen Farbstoffmolekül und Zellulosemolekül hergestellt. Dieser Farbstofftyp wird somit chemisch auf der Faser verankert.

Theoretisch sollten somit Reaktivfärbungen auf Zellulose ohne weiteres sehr hohe Naßechtheiten aufweisen. In der Praxis zeigt es sich jedoch, daß dies nicht der Fall ist. Die Gründe hierfür sind unterschiedlicher Art und möglicherweise noch nicht in ihrer Gesamtheit bekannt. Es kann jedoch gesagt werden, daß ein mehr oder weniger großer Anteil des zum Färben eingesetzten Reaktiv-Farbstoffs nicht mit der Zellulose-Faser, sondern mit Wassermolekülen reagiert. Bei der Reaktion mit Wasser verliert der Reaktivfarbstoff seine chemische Bindungsfähigkeit an die Zellulose und wird nur noch durch Nebenvalenzkräfte an das Fasermolekül gebunden.

Diese Erscheinung bei der praktischen Ausführung der Färbungen führen im Endeffekt dazu, daß Färbungen von Reaktivfarbstoffen auf Zellulose-Fasern nur dann hohe Naßechtheiten aufweisen, wenn sie nach der Färbeoperation einer gründlichen Nachwäsche unterworfen werden. Diese erforderliche Nachbehandlung kann einen technischen Aufwand erfordern, der an den eigentlichen Färbeprozeß heranreicht. Insbesondere werden für die Nachwäsche große Wassermengen benötigt, und es ist häufig erforderlich, nicht nur einen einzigen, sondern mehrere Waschgänge hintereinander zu schalten, um die gewünschte hohe Naßechtheit der Färbungen zu erzielen. Die Umständlichkeit und der hohe technische und finanzielle Aufwand, der mit den Waschoperationen verbunden ist, hat dazu geführt, daß eingehende Untersuchungen über den Auswaschmechanismus von Restfarbstoffen durchgeführt worden sind. Als Beispiel hierfür sei genannt, die Veröffentlichung von Dipl.-Chem. F. Somm und Text.-Ing. (grad.) R. Buser "Einfluß verschiedener Parameter auf das Auswaschverhalten von Reaktivfarbstoffen" in Textil-Praxis International 1982, Juli.

Es hat auch nicht an Versuchen und Vorschlägen gefehlt, das Auswaschen der Farbstoffreste zu erleichtern bzw. die Naßechtheit von Färbungen zu steigern, ohne den Auswaschaufwand erhöhen zu müssen.

Aus der DOS 29 10 583 ist ein Seifhilfsmittel für Färbungen und Drucke auf Textilmaterialien bekannt, das auf der Verwendung eines Alkalialuminiumsilikats, ggf. in Kombination mit Polyvinylpyrrolidon, basiert.

Das Problem, die an sich wasserlöslichen, aufgrund ihrer Substantivität an die Zellulose-Faser durch Nebenvalenzkräfte gebundenen Anteile des hydrolysierten Reaktivfarbstoffs von der Faser zu entfernen und damit die Naßechtheiten der Ware zu verbessern, ist auch bereits in der DOS 27 47 358 und DOS 28 43 645 aufgegriffen worden. Nach der Empfehlung der DOS 27 47 358 sollen für diesen Zweck Polyamine, Polyamide oder Polyurethane, sowie Polyharnstoffe eingesetzt werden. Nach den Angaben der DOS 28 43 645 können für denselben Zweck alkoxylierte Polyamine, wie z. B. alkoxyliertes Polyethylenimin, eingesetzt werden.

Zur Lösung eines verwandten Problems, nämlich der Naßechtheitsverbesserung von Substantiv-Färbungen ist aus DAS 1 111 144, DAS 1 131 649, der belgischen Patentschrift 625 711 und der US-Patentschrift 3 334 138 die Nachbehandlung der Färbungen mit basischen PolyguanidinVerbindungen und von polymeren quaternierten, stickstoffhaltigen Verbindungen bekannt.

Eine weitere nach dem Stand der Technik bekannte Möglichkeit zur Naßechtheitsverbesserung von Substantiv-Färbungen besteht in einer Nachbehandlung mit Kondensationsprodukten aus Cyanamid, Formaldehyd und Salzen organischer Amine oder Ammoniumsalzen.

Die Japanische Patentanmeldung 50-53675 betrifft die Nachbehandlung von Küpenfärbungen zum Zwecke der Echtheitsverbesserung. Das technische Problem hierbei unterscheidet sich jedoch gravierend von dem der Nachbehandlung von Reaktiv-Färbungen.

Küpen- und Schwefelfarbstoffe sind im Gegensatz zu Reaktivfarbstoffen nämlich von Natur aus wasserunlöslich und werden vor dem Einbringen der Textilmaterialien in den Farbflotten zunächst durch Reduktionsmittel in eine wasserlösliche Form überführt. Die gelösten Farbstoffe ziehen aufgrund einer gewissen Substantivität auf die Zellulose-Faser auf, d.h. nach gängiger Anschauung, daß sie im Idealfall in die Zellulose-Mycelle eindringen und dort zu hohen Konzentrationen angereichert werden. An den eigentlichen Färbeprozeß wird ein Oxydationsschritt angeschlossen, der die wasserlöslichen, sogenannten Leucofarbstoffe wieder zu wasserunlöslichen Makromolekülen oxydiert. Hierbei werden die in die Zellulosemycelle eingedrungenen Farbstoffmoleküle am Wiederaustritt gehindert.

Bei Schwefel- und Küpen-Farbstoffen dürfte eine echte Verankerung mit der Faser nur dann erfolgen, wenn die Farbstoff-Moleküle in die Zellulose-Mycelle eingedrungen sind. Farbstoffanteile, die mehr oder weniger auf der Oberfläche der Zellulose-Faser abgeschieden wurden, sind offenbar nur relativ locker gebunden.

Bei der Oxydation der Küpenfärbung werden nun auch Farbstoffanteile, die nicht in die Fasermycelle eingedrungen sind, sondern oberflächlich adsorbiert wurden, in völlig wasserunlösliche, pigmentartige Oxydationsprodukte verwandelt. Solche wasserunlöslichen Farbstoffanteile, die auf der Faseroberfläche abgelagert sind und die gefärbte Ware anschmutzen, stellen jedoch in sich weitgehend abgesättigte Partikel dar, die nur relativ lose an der Faseroberfläche fixiert sind. Die Kräfte zwischen solchen pigmentartigen Verschmutzungen und der Faseroberfläche einerseits und den Kräften zwischen hydrolysierten Reaktivfarbstoff-Rückständen und der Faseroberfläche andererseits können nicht miteinander verglichen werden. Die japanische Patentanmeldung 50-53675 empfiehlt nun, für die Nachbehandlung von Küpen-Färbungen den Einsatz von epichlorhydrin-modifizierten Diethylentriamin-Adipinsäure-Copolymeren oder von epichlorhydrin-modifiziertem Polyethylenimin. Nach den Angaben der Japanischen Patentschrift 53-44 589 kann diese Nachbehandlung mit epichlorhydrin-modifiziertem Polyethylenimin auch mit einem Schlichte-Verfahren kombiniert werden.

Die bisher für die Nachbehandlung von Reaktiv-Färbungen oder Substantiv-Färbungen bekannt gewordenen Nachbehandlungsmittel lassen in der Praxis jedoch noch zu wünschen übrig. So ist ihre Wirksamkeit relativ gering, so daß hohe Einsatzmengen verwendet werden müssen, um signifikante Effekte zu erzielen. Die erzielten Effekte sind insbesondere in bezug auf Waschechtheit bei 60°C und vor allem bei 95°C sowie auch in den Naßreibechtheiten nicht ausreichend. Bei der Nachbehandlung von Reaktiv-Färbungen mit den bekannten Kondensationsprodukten aus Cyanamid, Formaldehyd und Aminen läßt die erreichbare Schweißechtheit noch erheblich zu wünschen übrig. Außerdem finden sich auf der behandelten Ware oft Spuren von Formaldehyd. Die Nachbehandlung mit den nach dem stand der Technik bekannten basischen Verbindungen ist auch verfahrensmäßig diffizil. Sie muß nämlich sehr sorgfältig durchgeführt werden, damit die Wiederausfällung abgelösten Farbstoffs, sowie das Verkleben adsorbierter Farbstoffanteile auf der Faseroberfläche vermieden wird. Bei unvorsichtigem Umgang mit den bekannten Nachbehandlungsmitteln kann somit leicht das Gegenteil von dem gewünschten Effekt eintreten. Ein weiterer Mangel bisher bekannter Nachbehandlungsmittel besteht darin, daß sie in einem pH-Bereich über 9 Amine wie Methylamin oder Dimethylamin abspalten. Dies führt bei der Anwendung zu erheblichen Geruchsbelästigungen. Ähnlich verhält sich auch Polyethylenimin.

Im Prinzip ist es selbstverständlich möglich, Reaktivfärbungen mit hohen Naßechtheiten einfach dadurch zu erzeugen, daß man das gefärbte Material in einer ausreichenden Anzahl, z. B. 6 bis 8, hintereinander geschalteter Waschgänge unter kräftiger mechanischer Bewegung bei hoher Temperatur und unter Einsatz wirksamer Detergentien mehrfach wäscht. Dieses Verfahren ist jedoch nicht nur sehr zeitraubend und setzt einen hohen apparativen Aufwand voraus, sondern es wird dabei auch eine ungeheuere Menge Wasser verbraucht, was im Sinne einer sinnvollen Nutzung des Wassers, insbesondere der Trinkwasservorräte nicht mehr tragbar ist. Außerdem fallen sehr hohe Mengen von gebrauchten Waschflotten an, die vor ihrer Einleitung in Kanalisation oder Flüsse selbstverständlich aufgearbeitet werden müssen. Es bestand daher nach wie vor das dringende Problem, unter Vereinfachung der Waschprozesse, zur Rohstoff- und Kostenersparnis und zur Erleichterung der ökologisch einwandfreien Entsorgung der Färbereiabwässer ein Verfahren bereitzustellen, das es ermöglicht, mit geringerem Aufwand zu Reaktivfärbungen zu gelangen, die die geforderten Echtheitseigenschaften, insbesondere Naßechtheitseigenschaften, wie Wasserbeständigkeit, Waschbeständigkeit bei 60° und insbesondere 95°C, Schweiß sauer und alkalisch, Seewasserbeständigkeit und Reibechtheit, aufweisen.

Überraschend wurde nun gefunden, daß man bei der Herstellung von Reaktivfärbungen einen großen Teil der sonst erforderlichen Waschstufen einsparen kann und dennoch zu Färbungen von hervorragender Echtheit gelangt, wenn man die Färbungen einer Nachbehandlung in einer Waschflotte unterwirft, die neben üblichen Detergentien und Waschflottenzusätzen ein Nachbehandlungsmittel enthält, das ein Umsetzungsprodukt von Polyethylenimin mit bifunktionellen Alkylierungsmitteln enthält.

Normalerweise erfolgt die erfindungsgemäße Nachbehandlung in einem Flottenverhältnis von 1 : 5 bis 1 : 3, vorzugsweise 1 : 10 bis 1 : 20. Dabei wird eine Flotte eingesetzt, die pro Liter 0,5 bis 6 g, vorzugsweise 1 bis 3 g, des erfindungsgemäßen Hilfsmittels enthält. In speziellen Fällen können selbstverständlich Flottenverhältnis und Hilfsmittelkonzentration über die angegebenen normalen Grenzen hinaus variiert werden. Die gewünschten Echtheitsverbesserungen werden dann erzielt, wenn das Hilfsmittel in einer Aufwandmenge von 0,5 bis 5 %, vorzugsweise 1 bis 3 %, insbesondere 2 bis 3 %, des Warengewichts appliziert wird.

Zweckmäßigerweise wird die Nachbehandlung mit der erfindungsgemäß einzusetzenden Nachbehandlungsflotte bei 40 bis 100°C, vorzugsweise 60 bis 90°C, durchgeführt.

Das zur Herstellung des erfindungsgemäß einzusetzenden Nachbehandlungsmittels erforderliche Polyethylenimin entspricht der Formel I

$$H-(CH_2-CH_2-NH)_a- \cdot -(CH_2-CH_2-\underset{X}{\underset{|}{N}})_b-H \qquad (I)$$

worin

X ein Rest der Formel $-(CH_2-CH_2-NH)_c-H$

a und b unabhängig voneinander Zahlen von 0 bis 600 sind, wobei die Summe a + b eine Zahl von 50 - 600 ist und c eine Zahl von 0 bis 50 ist.

Das bedeutet, daß das eingesetzte Polyethylenimin ein Molekül darstellt, in dem $-NH_2$-, >NH- und gegebenenfalls -N< -Bausteine vorhanden sind, die durch Ethylengruppen miteinander verknüpft sind. Insgesamt enthält das Polyethylenimin etwa 50 bis 600 Ethylenimineinheiten. In üblichen Handelsprodukten stehen primäre, sekundäre und tertiäre Stickstoffunktionen in einem zahlenmäßigen Verhältnis von etwa 1 : 2 : 1.

Zur Reaktion mit dem Ethylenimin der Formel I können im Prinzip alle bekannten bifunktionellen Alkylierungsmittel eingesetzt werden. Solche bekannten bifunktionellen Alkylierungsmittel entsprechen der Formel II

$$A—Z—A \qquad (II)$$

In dieser Formel bedeutet A den Rest eines alkylierenden Agens und Z entweder eine direkte Bindung oder ein zweiwertiges Brückenglied.

Besonders geeignet für die Umsetzung mit den Polyethyleniminen zu erfindungsgemäß einzusetzenden Hilfsmitteln sind solche bifunktionellen Alkylierungsmittel der Formel II in denen A eine Gruppe der Formel $-CH_2-Y$,

worin Y ein als Anion abspaltbarer Substituent, insbesondere Chlor, Brom, Jod oder -OH oder eine als Anion abspaltbare Gruppe, insbesondere die Sulfatogruppe

oder eine Sulfonyloxygruppe, insbesondere Phenylsulfonyloxy oder p-Tolylsulfonyloxy, oder die Epoxygruppe

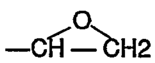

bedeutet und Z, sofern es keine direkte Bindung ist, für einen zweiwertigen geradkettigen oder verzweigten Rest der Formel III

$$—C_nH_{2n}— \qquad (III)$$

worin n eine Zahl von 1 bis 4 ist, einen zweiwertigen Rest der Formel IV

$$—C_mH_{2m}—D—C_mH_{2m}— \qquad (IV)$$

worin m die Zahlen 1 oder 2 bedeutet und D für -O-, -S-, -NH-, -CO-, -SO-, $-SO_2-$ oder für Phenylen steht.

Bevorzugt für die Umsetzung mit Polyethylenimin zu erfindungsgemäß einzusetzenden Hilfsmitteln sind solche bifunktionellen Alkylierungsmittel, in denen A Gruppen der Formel $-CH_2-Y$ sind, die über ein Brückenglied der Formel IV miteinander verknüpft sind, oder solche, in denen einer der Reste A eine Gruppe der Formel $-CH_2-Y$ ist, die direkt an eine Epoxygruppe gebunden ist.

Beispiele für solche bifunktionellen Alkylierungsmittel sind Epichlorhydrin, Glycid, 1,3-Dichlor-propan-2-ol, β,β'-Dichlordiethyläther, β,β'-Dichlor-diethylamin, β,β'-Dichlor-diethylsulfid, β,β'-Dichlor-diethylsulfoxid, β,β'-Dichlor-diethylsulfon, β,β'-Disulfatoethyläther, β,β'-Diphenylsulfonyloxyethyläther, meta- oder para-Diepoxyethylbenzol, meta- oder para-Diepoxypropylbenzol, Diepoxybutan, Diepoxy-2-methylbutan, Diepoxypropylamin.

Zur Herstellung der erfindungsgemäß einzusetzenden Nachbehandlungsmittel werden das Polyethylenimin und das bifunktionelle Alkylierungsmittel vorzugsweise in einem Gewichtsverhältnis von 100 : 0,01 bis 100 : 2,0, vorzugsweise von 100 : 0,1, bis 100 : 1,0, miteinander umgesetzt.

Es ist anzunehmen, daß bei dieser Umsetzung ein Einbau von vernetzenden Brückengliedern zwischen den Polyethyleniminketten erfolgt. Als äußeres Anzeichen hierfür ist zu werten, daß die Viskosität der wäßrigen Lösungen beim Übergang von unvernetztem Polyethylenimin zu dem durch das bifunktionelle Alkylierungsmittel vernetzten Produkt deutlich ansteigt. Die Umsetzung des Polyethylenimins mit den bifunktionellen Alkylierungsmitteln kann prinzipiell ohne Lösungsmittel erfolgen. Im Hinblick auf die bessere Steuerungsmöglichkeit der Reaktion und die günstigere Wärmeabfuhr ist es jedoch zweckmäßig, die Umsetzung in Gegenwart eines inerten Lösungsmittels durchzuführen. In Betracht kommen hierfür sowohl organische Lösungsmittel, in denen die Reaktanten löslich sind, wie beispielsweise niedere Alkohole als auch insbesondere Wasser. Die Reaktion kann im Temperaturbereich zwischen -10 und etwa 100°C durchgeführt werden. Besonders vorteilhaft ist die Durchführung in der Umgebung der normalen Zimmertemperatur, d.h. im Gebiet zwischen 15 und 45°C. Hierbei ergibt sich ein Reaktionsverlauf mit guter Steuerungsmöglichkeit, sehr guter Produktqualität und geringstmöglichem Energieaufwand. Die Reaktion ist bei dieser Reaktionsführung in ca. 1 bis 2 Stunden im wesentlichen abgeschlossen.

Um erfindungsgemäß einzusetzende Hilfsmittel zu erhalten, die besonders engtolerierte Spezifikationen aufweisen, d.h. um eine besonders gute Reproduzierbarkeit des Herstellungsverfahrens zu erreichen, ist es vorteilhaft, nach Ablauf der Hauptreaktion das Reaktionsgemisch bei einem definierten pH-Wert zwischen 9 und 10 mehrere Stunden, in der Regel 2 bis 6 Stunden, bei erhöhter Temperatur, zweckmäßigerweise zwischen 60 und 100°C nachzurühren.

Der Einsatz der so hergestellten Nachbehandlungsmittel führt zu einer sehr erheblichen Verbesserung der Naßechtheiten von Reaktivfärbungen bei gleichzeitiger erheblicher Einsparung bei den Waschoperationen. Die echtheitsverbessernden Effekte werden bereits mit relativ geringen Zusatzmengen der erfindungsgemäß zuzusetzenden Hilfsstoffe erreicht und liegen deutlich über den mit nächstsvergleichbaren bekannten Hilfsmitteln zu erzielenden Ergebnissen. So sind die mit erfindungsgemäßen Produkten nachbehandelten Reaktivfärbungen beispielsweise den mit den aus der DOS 28 43 645 bekannten Alkoxydiethylpolyaminen nachbehandelten Reaktivfärbungen deutlich bis erheblich überlegen.

Die folgenden Ausführungsbeispiele veranschaulichen die Herstellung erfindungsgemäß einzusetzender Nachbehandlungsmittel und deren Einsatz.

**Beispiele 1**

In einem 1-Liter-Vierhalskolben werden 332 ml Trinkwasser und 220 g (5,1 Mol) Polyethylenimin in Form einer 50 %-igen wässerigen Lösung von einem durchschnittlichen Molgewicht von 3000 - 5000 bei 20 -30°C vorgelegt und bei dieser Temperatur durch Zugabe von 0,11 g Epichlorhydrin vernetzt. Nach 40 Minuten wird die Lösung durch Zusatz von $H_2SO_4$ konz. auf einen pH-Wert vom 9,5 eingestellt und 4 Stunden bei 90°C nachgeheizt.

Anschließend wird die Lösung durch Wasserzusatz auf eine Konzentration von 24 % eingestellt.

K-Werte (gemessen in 1 %-iger wässeriger Lösung): Polyethylenimin (Ausgangsmaterial): 39 x $10^3$

Produkt: 50 x $10^3$.

In analoger Weise können die Beispiele der folgenden Tabelle hergestellt werden.

**Tabelle 1**

| Polyamin Komponente A | Mol-menge (A) | Vernetzer Komponente (B) | Mol-menge (B) | Mol-verhältnis A : B | K 1 %wäßr. Lösung | Gewichts-verhältnis A : B |
|---|---|---|---|---|---|---|
| Polyethylenimin | 5,1 | 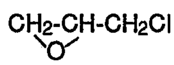 | 0,015 | 340 : 1 | 50 x $10^3$ | 100 : 0,63 |
| Polyethylenimin | 5,1 | 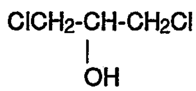 | 0,008 | 63,75 : 1 | 60 x $10^3$ | 100 : 0,47 |
| Polyethylenimin | 10,0 | $ClCH_2\text{-}CH_2SO\text{-}CH_2\text{-}CH_2Cl$ | 0,03 | 333 : 1 | 64 x $10^3$ | 100 : 0,07 |
| Polyethylenimin | 8,0 | $Cl\text{-}CH_2\text{-}CH_2SO_2\text{-}CH_2\text{-}CH_2Cl$ | 0,004 | 2000 : 1 | 70 x $10^3$ | 100 : 0,18 |
| Polyethylenimin | 5,0 | $Na^{\oplus\ominus}O_3SO\text{-}CH_2CH_2\text{-}O\text{-}CH_2\text{-}$ $\text{-}CH_2\text{-}OSO_3{}^{\ominus}Na^{\oplus}$ | 0,001 | 5000 : 1 | 54 x $10^3$ | 100 : 0,14 |
| Polyethylenimin | 6,0 | 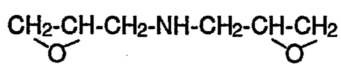 | 0,025 | 240 : 1 | 63 x $10^3$ | 100 : 1,25 |
| Polyethylenimin | 4,0 | 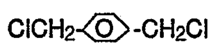 | 0,01 | 400 : 1 | 72 x $10^3$ | 100 : 1,01 |
| Polyethylenimin | 7,0 | 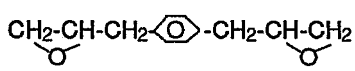 | 0,02 | 350 : 1 | 55 x $10^3$ | 100 : 1,25 |
| Polyethylenimin | 5,1 | 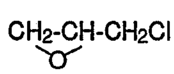 | 0,023 | 221,73:1 | 60 x $10^3$ | 100 : 1,004 |

**Tabelle 2**

| Polyamin Komponente A | Mol-menge (A) | Vernetzer Komponente (B) | Mol-menge (B) | Mol-verhältnis A : B | K 1 % wäßr. Lösung | Gewichts-verhältnis A : B |
|---|---|---|---|---|---|---|
| Polyethylenimin | 4 | 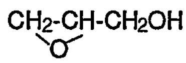 | 0,04 | 100 : 1 | $70 \times 10^3$ | 100 : 1,72 |
| Polyethylenimin | 20 | 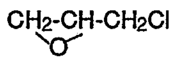 | 0,025 | 800 : 1 | $75 \times 10^3$ | 100 : 0,26 |
| Polyethylenimin | 50 | 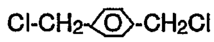 | 0,012 | 620 : 1 | $54 \times 10^3$ | 100 : 0,098 |
| Polyethylenimin | 80 | $Cl-CH_2-CH_2-SO_2-CH_2-CH_2Cl$ | 0,009 | 8888 : 1 | $42 \times 10^3$ | 100 : 0,04 |
| Polyethylenimin verzweigt prim./sek./tert. 1 : 2 : 1 | 75 | $ClCH_2-CH-CH_2Cl$<br>\|<br>OH | 0,0025 | 30000 : 1 | $68 \times 10^3$ | 100 : 0,01 |

**Anwendungsbeispiel 1**

Ein abgekochter Baumwolltrikotstoff wird in einer Flotte gefärbt, die 3 % ®Remazoldünkelblau HR, 3 % ®Remazolschwarz B, 1 g/l ®Calgon T,50 g/l Glaubersalz und 20 g/l Soda kalz. enthält. Nachdem die Färbung 1 Stunde bei einer Temperatur von 60°C dürchgeführt wurde, neutralisiert man die Probe kalt mit Essigsäure und spült während 10 Minuten mit heißem Wasser. Nach einem kochenden Seifen erfolgt eine 20minütige Behandlung bei Raumtemperatur in einer Lösung, die 5 % des Produkts gemäß Beispiel 1, berechnet auf das Trockengewicht der Ware, enthält. Anschließend wird kalt gespült.

Man erhält folgende Echtheiten (Anbluten von Baumwoll-Begleitgewebe):

| | geseifte Färbüng | 5 % Produkt Beispiel | 5 % ®Solidogen FFL* |
|---|---|---|---|
| Wasser schwer | 4 | 5 | 5 |
| Schweiß alk. + sauer | 4 - 5 | 5 | 4 - 5 |
| Wäsche 60°C | 3 | 4 | 3 - 4 |
| Persilwäsche 60°C | 2 - 3 | 3 - 4 | 3 |
| Wäsche 95°C | 2 | 3 | 2 - 3 |
| Reibechtheit trocken | 3 | 4 | 4 |
| naß | 3 | 3 | 2 - 3 |

* Handelsübliches Nachbehandlungsmittel zur Echtheitsverbesserung von Substantiv- und Reaktivfärbüngen.

**Anwendungsbeispiel 2**

Abgekochtes und gebleichtes Baumwollgarn wird in einer Flotte gefärbt, die 2 % ®Levafix-Scharlach E-2GA, 2 % BLevafix-Brillantrot E-BA, 1 g/l ®Calgon T und 25 g/l Glaubersalz enthält. Man färbt 10 Min. bei 40°C, setzt weitere 25 g/l Glaubersalz und nach weiteren 30 Min. 20 g/l Soda zu. Nach einer weiteren Stunde ist die Färbung beendet.

Nach dem Färben wird wie üblich kalt mit Essigsäure neutralisiert, gespült und mit 5 % des Produkts (bezogen auf das Trockengewicht) des Beispiels 1 während 20 Minuten bei pH 6 behandelt.

Man erhält eine Färbung mit verbesserten Echtheiten. Bei Anbluten von Baumwollbegleitgewebe werden folgende Echtheiten erhalten:

| | Ungeseifte Färbung | 5 % Produkt Beispiel | 5 % ®Solidogen FFL |
|---|---|---|---|
| Wasser schwer | 2 - 3 | 3 - 4 | 2 - 3 |
| Schweiß alk. | 2 | 3 | 2 |
| Schweiß sauer | 2 | 4 | 2 |
| Wäsche 60°C | 3 | 3 - 4 | 3 |
| Wäsche 95°C | 2 - 3 | 4 | 3 |

Auch hier verhält sich das Produkt des Beispiels 1 wesentlich besser als das handelsübliche Nachbehandlungsmittel Solidogen FFL.

Ähnliche Echtheitsverbesserungen erhält man, wenn man mit dem erfindungsgemäßen Mittel Reaktivfärbungen behandelt, die nach anderen Verfahren, z. B. Pad-Steam oder Kaltverweilverfahren, hergestellt würden.

Analog können auch die Produkte der Tabelle 1 zur Echtheitsverbesserung von Reaktivfärbungen eingesetzt werden.

**Patenansprüche**

1. Verfahren zur Echtheitsverbesserung von Reaktivfärbungen durch Nachbehandlung der Färbungen in der wäßrigen Lösung eines Polyamins, dadurch gekennzeichnet, daß als Nachbehandlungsmittel ein Umsetzungsprodukt von Polyethylenimin mit einem bifunktionellen Alkylierungsmittel in einer Menge von 0,5 bis 5 % des Warengewichts verwendet wird.

2. Verfahren gemäß Anspruch 1, dadurch gekennzeichnet, daß das Nachbehandlungsmittel der Waschflotte in einer Menge von 1 bis 3 % des Warengewichts zugesetzt wird.

3. Verfahren gemäß den Ansprüchen 1 und 2, dadurch gekennzeichnet, daß als Nachbehandlungsmittel ein Umsetzungsprodukt von Polyethylenimin mit Epichlorhydrin, 1.3-Dichlorpropan-2-ol oder deren Gemischen eingesetzt wird.

4. Verfahren gemäß den Ansprüchen 1 bis 3, dadurch gekennzeichnet, daß als Nachbehandlungsmittel ein Umsetzungsprodukt von Polyethylenimin mit einem bifunktionellen Alkylierungsmittel in einem Reaktanten-Gewichtsverhältnis von 100 : 0,01 bis 100 : 2 eingesetzt wird.

5. Verfahren gemäß den Ansprüchen 1 bis 4, dadurch gekennzeichnet, daß als Nachbehandlungsmittel ein Umsetzungsprodukt von Polyethylenimin mit einem bifunktionellen Alkylierungsmittel in einem Reaktanten-Gewichts-Verhältnis von 100 : 0,1 bis 100 : 1,0 eingesetzt wird.

6. Verfahren gemäß den Ansprüchen 1 bis 5, dadurch gekennzeichnet, daß die Nachbehandlung der Färbungen bei Temperaturen von 40 bis 100°C erfolgt.

**Claims**

1. Process for improving the fastness of reactive dyeings by aftertreating the dyeings in the aqueous solution of a polyamine, characterised in that the aftertreatment agent used is a reaction product of polyethyleneimine with a bifunctional alkylating agent in an amount of 0.5 to 5 % on weight of fibre.

2. Process according to Claim 1, characterised in that the aftertreatment agent is added to the wash liquor in an amount of 1 to 3 % on weight of fibre.

3. Process according to Claims 1 and 2, characterised in that the aftertreatment agent used is a reaction product of polyethyleneimine with epichlorohydrin, 1,3-dichloropropan-2-ol or mixtures thereof.

4. Process according to Claims 1 to 3, characterised in that the aftertreatment agent used is a reaction product of polyethyleneimine with a bifunctional alkylating agent in a reactant weight ratio of 100 : 0.01 to 100 : 2.

5. Process according to Claims 1 to 4, characterised in that the aftertreatment agent used is a reaction product of polyethyleneimine with a bifunctional alkylating agent in a reactant weight ratio of 100 : 0.1 to 100 : 1.0.

6. Process according to Claims 1 to 5, characterised in that the dyeings are aftertreated at temperatures of 40 to 100°C.

**Revendications**

1. Procédé pour améliorer les propriétés de solidité de teintures réalisées à l'aide de colorants réactifs, par traitement ultérieur des teintures dans la solution aqueuse d'une polyamine, procédé caractérisé en ce qu'on utilise, en une quantité représentant 0,5 à 5 % du poids de la matière traitée, comme produit de traitement ultérieur un produit de réaction d'une polyéthylèneimine avec un agent bifonctionnel d'alkylation.

2. Procédé selon la revendication 1, caractérisé en ce que le produit pour traitement ultérieur est ajouté, en une quantité de 1 à 3 % du poids de la matière à traiter, au bain de lavage.

3. Procédé selon les revendications 1 et 2, caractérisé en ce qu'on utilise, comme produit pour le traitement ultérieur un produit de réaction d'une polyéthylène-imine avec l'épichlorhydrine, le dichloro-1,3 propanol-2, ou un de leurs mélanges.

4. Procédé selon les revendications 1 à 3, caractérisé en ce qu'on utilise comme produit pour traitement ultérieur, un produit de réaction d'une polyéthylène-imine avec un agent bifonctionnel d'alkylation, selon un rapport pondéral entre les corps destinés à réagir qui va de 100 : 0,01 à 100 : 2.

5. Procédé selon les revendications 1 à 4, caractérisé en ce qu'on utilise comme produit pour traitement ultérieur, un produit de la réaction d'une polyéthylène-imine avec un agent bifonctionnel d'alkylation, selon un rapport pondéral entre les corps destinés à réagir qui va de 100 : 0,1 à 100 : 1,0.

6. Procédé selon les revendications 1 à 5, caractérisé en ce que le traitement ultérieur des teintures est réalisé à des températures de 40 à 100°C.